# EUROPÄISCHE PATENTSCHRIFT

(11) **EP 1 582 444 B1**
(45) Veröffentlichungstag und Bekanntmachung des Hinweises auf die Patenterteilung: **16.05.2007**
(21) Anmeldenummer: 05006207.4
(22) Anmeldetag: 22.03.2005
(51) Int. Cl.: B62D 35/00

(54) **Kraftfahrzeug mit einem verstellbaren Heckspoiler**
Motor vehicle with an adjustable rear spoiler
Véhicule automobile avec une becquet arrière réglable

(30) Priorität: 01.04.2004 DE 102004016105
(43) Veröffentlichungstag der Anmeldung: 05.10.2005
(73) Patentinhaber: Bayerische Motoren Werke Aktiengesellschaft, 80809 München (DE)
(72) Erfinder: Kolling, Joachim, Dr., 85386 Eching (DE)

(56) Entgegenhaltungen:
- DE-A1- 4 234 943
- DE-A1- 10 062 076
- DE-U1- 20 001 695
- US-A1- 2003 071 485

## Beschreibung

Die Erfindung betrifft ein Kraftfahrzeug gemäß dem Oberbegriff des Anspruchs 1.

Es ist beispielsweise aus der DE 102 22 082 ein Fahrzeug mit einem Heckspoiler bekannt, der über einen Antrieb in seiner Position verstellbar ist.

Aufgabe der Erfindung ist es, ein Kraftfahrzeug zu schaffen, das einen verstellbaren Heckspoiler aufweist.

Diese Aufgabe wird durch die Merkmale des Anspruchs 1 gelöst.

Bei dem erfindungsgemäßen Kraftfahrzeug ist eine Aussparung in der Kraftfahrzeugkarosserie am Fahrzeugheck ausgebildet, in der ein als Heckspoiler dienendes, um eine Drehachse schwenkbares Luftleitprofil angeordnet ist.

Die Form des Luftleitprofils und die Lage der Drehachse des Luftleitprofils ist so gewählt, dass ab einem vorbestimmten Fahrtwinddruck, der auf einen hinteren überstehenden Teil des Luftleitprofils wirkt, der hintere Teil des Spoilers um die Drehachse nach unten gedrückt wird, so dass sich ein vorderer Teil des Luftleitprofils anhebt.

Bei einer Erhöhung der Fahrzeuggeschwindigkeit und der damit verbundenen Erhöhung des Strömungsdruckes wird der vordere Teil des Luftleitprofils weiter bis in eine Endstellung angehoben, so dass das Luftleitprofil in seine Betriebsstellung verschwenkt ist. Eine an einer Unterseite, am vorderen Teil des Luftleitprofils ausgebildete Abrisskante kommt in der Betriebsstellung zur Wirkung. Durch diese Bauweise wird vorteilhafterweise ohne einen separaten Antrieb automatisch bei einer vorbestimmten Fahrgeschwindigkeit der Heckspoiler wirksam.

Das erfindungsgemäße Luftleitprofil ist mit einer Rückstellvorrichtung versehen, durch die das Luftleitprofil bei einer vorbestimmten Fahrgeschwindigkeit aus der Betriebsstellung in die Ruhestellung zurückstellbar ist. Vorteilhafterweise wird zum Antrieb der Rückstellvorrichtung mindestens eine Feder verwendet.

In einer vorteilhaften Ausführungsform beträgt der Schwenkwinkel des Luftleitprofils zwischen der Ruhestellung und der Betriebsstellung α = 90° ± 45°.

In einer vorteilhaften Ausführungsform weist das Luftleitprofil einen Hohlraum auf, in dem ein Fahrzeugbauteil angeordnet ist. Ein solches Fahrzeugbauteil kann beispielsweise ein Bremslicht oder dergleichen sein.

Eine Ausführungsform der Erfindung wird nachstehend anhand der Figuren beispielshalber beschrieben. Dabei zeigen:
- Figur 1: eine Schnittansicht von der Seite einer Heckklappe eines Kraftfahrzeuges, in der ein verschwenkbarer Heckspoiler angeordnet ist,
- Figur 2: eine Schnittansicht von der Seite der in der Figur 1 gezeigten Heckklappe, bei der der Verlauf einer Luftströmung eingezeichnet ist, die aufgrund einer niedrigen Fahrgeschwindigkeit zu gering ist, um den Heckspoiler zu verschwenken,
- Figur 3: eine Schnittansicht von der Seite entsprechend der Figur 2, bei der eine Luftströmung eingezeichnet ist, durch die ein vorderes Ende des Heckspoilers aus einer Aussparung angehoben wird und
- Figur 4: eine Schnittansicht von der Seite entsprechend der Figur 2, bei der der Heckspoiler durch die Luftströmung vollständig in die Betriebsstellung ausgeklappt ist.

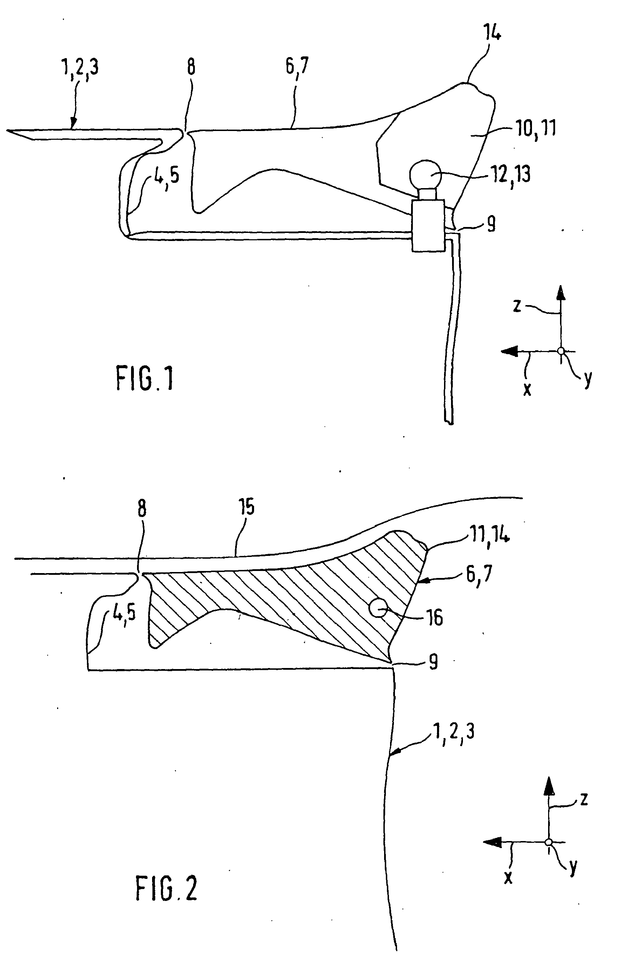

Die Figur 1 zeigt einen oberen Abschnitt einer in einer Karosserie 2 eines Kraftfahrzeuges 1 angeordneten Heckklappe 3. Die Heckklappe 3 ist an ihrem oberen, hinteren Ende 4 mit einer Aussparung 5 versehen. Die Aussparung 5 wird durch ein Spoilerelement 6 so ausgefüllt, dass in einer in der Figur 1 gezeigten Ruhestellung 7 lediglich die umlaufenden Fugen 8, 9 erkennen lassen, dass das Spoilerelement 6 ein separates Bauteil an der Heckklappe 3 ist.

Das Spoilerelement 6 ist in der gezeigten Ausführungsform als ein Profil ausgebildet, das einen Hohlraum 10 am hinteren Abschnitt 11 des Spoilerelements 6 aufweist, in dem ein zusätzliches Fahrzeugbauteil 12 angeordnet ist. Ein solches Fahrzeugbauteil 12 kann beispielsweise eine dritte, integrierte Bremsleuchte 13 sein. Am hinteren Abschnitt 11 des Spoilerelements 6 ist ferner eine erste, in vertikaler Richtung z und in Fahrzeugquerrichtung y über die Karosserie 2 überstehende Abrisskante 14 ausgebildet.

Die Figur 2 unterscheidet sich von der Figur 1 dadurch, dass eine der Fahrgeschwindigkeit entsprechende Luftströmungslinie 15 eingezeichnet ist. Der von der Luftströmung 15 auf die Abrisskante 14 wirkende Druck ist jedoch zu gering, um das Spoilerelement 6 um eine in Fahrzeugquerrichtung y verlaufende Drehachse 16 von der Heckklappe 3 wegzuschwenken.

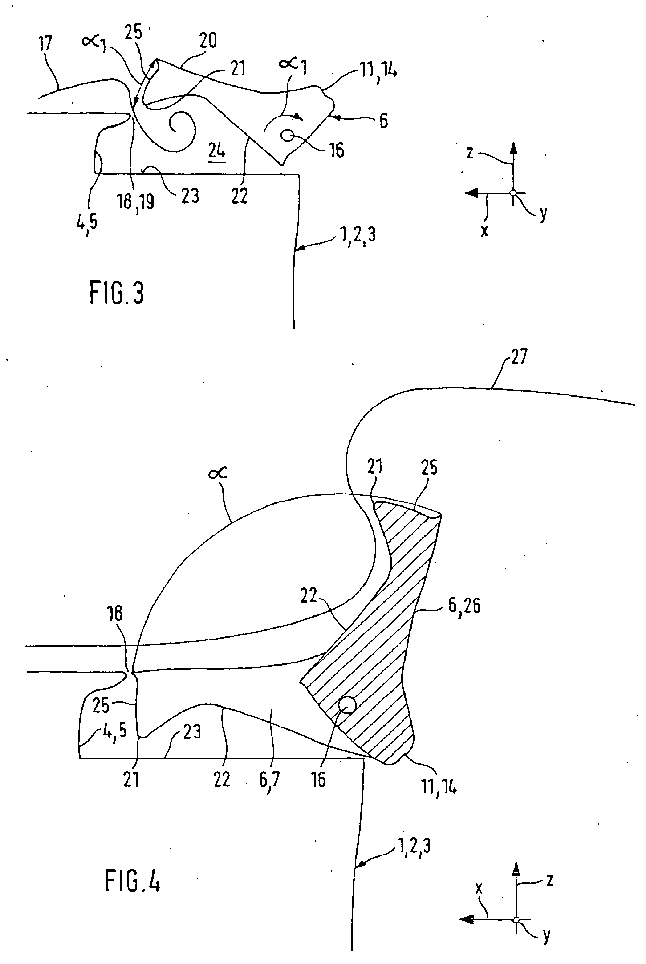

Die Figur 3 zeigt das um einen Winkel α*₁* durch die Luftströmung 17 verstelltes Spoilerelement 6. Die Luftströmung ist als eine Linie 17 eingezeichnet. Die durch den Fahrtwind erzeugte Luft strömt entsprechend der Luftströmungslinie 17 durch einen Spalt 18 zwischen einer Kante 19 der Heckklappe 3 und einer, an einem vorderen Abschnitt 20 an einer Unterseite 22 des Spoilerelements 6 ausgebildeten Abrisskante 21. Die durch den Spalt 18 eindringende Luft füllt einen zwischen der Unterseite 22 des Spoilerelementes 6 und einer Oberfläche 23 der Aussparung 5 ausgebildeten Hohlraum 24.

Ab einem definierten Luftdruck, der auf eine Stirnfläche 25 des Spoilerelementes 6 und auf die Unterseite 22 des Spoilerelementes 6 wirkt, wird das Spoilerelement 6 weiter verschwenkt, so dass nach einem Winkel α die in der Figur 4 gezeigte Betriebsstellung 26 erreicht wird. Ein Schwenkwinkel *a* zwischen der Ruhestellung 7 und der Betriebsstellung 26 liegt bei α =90° ± 45°

Das Spoilerelement 6 wird in der Betriebsstellung 26 durch einen nicht dargestellten Anschlag gehaltert. Ferner ist eine nicht dargestellte Rückstellvorrichtung vorgesehen, die das Spoilerelement 6 aus der Betriebsstellung 26 in die Ruhestellung 7 zurückbewegt. Die Rückstellvorrichtung kann beispielsweise eine Feder aufweisen. Die Rückstellung des Spoilerelementes 6 kann in Abhängigkeit von der Fahrzeuggeschwindigkeit oder individuell erfolgen.

Durch das in der Betriebsstellung 26 befindliche Spoilerelement 6 werden Abtriebskräfte über die Karosserie 2 auf hintere Räder des Kraftfahrzeuges 1 übertragen. Die in der Figur 4 eingezeichnete Luftströmungslinie 27 deutet den Widerstand an, den das Spoilerelement 6 verursacht.

## Patentansprüche

1. Kraftfahrzeug mit einer Karosserie, an deren Heckabschnitt ein verschwenkbarer Spoiler angeordnet ist, der eine über die Karosserie überstehende Abrisskante aufweist, wobei das Spoilerelement über eine in Fahrzeug-Querrichtung y verlaufende, horizontale Drehachse zwischen einer Ruhestellung und einer Betriebsstellung und zurück hin- und herbewegbar ist, wobei in der Betriebsstellung auf das Spoilerelement über eine ab einer bestimmten Fahrgeschwindigkeit wirkende Luftströmung ein aerodynamischer Abtrieb erzeugt wird, **dadurch gekennzeichnet, dass** die Lage des Spoilerelementes (6) am Fahrzeugheck (3), die Form des Spoilerelementes (6) und die Lage der Drehachse (16) so gewählt sind, dass die Luftströmung, die auf die über die Karosserie (2) überstehende erste Abrisskante (14) wirkt, das Spoilerelement (6) um die Drehachse (16) aus der Ruhestellung (7) in die Betriebsstellung (26) um einen Winkel (α) verschwenkt, so dass eine zweite Abrisskante (21), die an einem vorderen Abschnitt (20) an einer Unterseite (22) des Spoilerelementes (6) ausgebildet ist, in der Betriebsstellung (26) zum Einsatz kommt.

2. Kraffahrzeug nach Anspruch 1, **dadurch gekennzeichnet, dass** die Karosserie (2) am Fahrzeugheck (3) eine Aussparung (5) aufweist, in der mindestens ein Spoilerelement (6) über die Drehachse (16) verschwenkbar gelagert ist und dass die Drehachse (16) an einem hinteren Abschnitt (11) des Spoilerelementes (6) ausgebildet ist.

3. Kraffahrzeug nach den Ansprüchen 1 oder 2, **dadurch gekennzeichnet, dass** der Schwenkwinkel α zwischen der Ruhestellung (7) und der Betriebsstellung (26) bei α = 90° ± 45° liegt.

4. Kraftfahrzeug nach einem der vorhergehenden Ansprüche, **dadurch gekennzeichnet, dass** das Spoilerelement (6) mit einer Rückstellvorrichtung versehen ist, die das Spoilerelement (6) aus der Betriebsstellung (26) automatisch oder individuell gesteuert in die Ruhestellung (7) zurückbewegt.

5. Kraftfahrzeug nach einem der vorhergehenden Ansprüche, **dadurch gekennzeichnet, dass** an einem hinteren Abschnitt (11) des Spoilerelementes (6) ein Hohlraum (10) ausgebildet ist, in dem ein Fahrzeugbauteil (12, 13) angeordnet ist.

6. Kraftfahrzeug nach Anspruch 5, **dadurch gekennzeichnet, dass** das Fahrzeugbauteil (12) einer Bremsleuchte (13) ist.

## Claims

1. A motor vehicle with a body having a rear portion containing a pivotable spoiler which has a flow breakaway edge projecting over the body, wherein the spoiler element is movable in reciprocation between an inoperative position and an operative position and back round a horizontal axis of rotation extending in the transverse direction y of the vehicle, wherein in the operative position an air flow acting on the spoiler element generates a negative aerodynamic lift above a set speed of travel, **characterised in that** the position of the spoiler element (6) at the rear (3) of the vehicle, the shape of the spoiler element (6) and the position of the axis (1 6) of rotation are so chosen that the air flow acting on the first flow breakaway edge (14), which projects above the body (2), pivots the spoiler element (6) around the axis (16) out of the inoperative position (7) into an operative position (26) through an angle ( ) such that a second flow breakaway edge (21) formed on a front portion (20) on an underside (22) of the spoiler element (6) comes into service in the operating position (26).

2. A vehicle according to claim 1, **characterised in that** the body (2) at the rear (3) has a recess (5) in which at least one spoiler element (6) is mounted so as to be pivotable around the axis (16), and the axis (16) is situated at a rear portion (11) of the spoiler element (6).

3. A vehicle according to claim 1 or claim 2, **characterised in that** the angle between the inoperative position (7) and the operative position (26) is = 90° ± 45°.

4. A vehicle according to any of the preceding claims, **characterised in that** the spoiler element (6) has a return device which moves the spoiler element (6) back out of the operative position (26) into the inoperative position (7), automatically or under individual control.

5. A vehicle according to any of the preceding claims, **characterised in that** a cavity (10) is formed in a rear portion (11) of the spoiler element (6) and contains a component (12, 13) of the vehicle.

6. A vehicle according to claim 5, **characterised in that** the component (12) is a stop light (13).

## Revendications

1. Véhicule automobile avec une carrosserie dont la partie arrière est munie d'un becquet pivotant qui présente une arête de rupture dépassant de la carrosserie, le becquet pouvant décrire un mouvement de va-et-vient entre une position de repos et une position de fonctionnement et inversement par l'intermédiaire d'un axe de rotation horizontal s'étendant dans la direction transversale y du véhicule, une réduction aérodynamique étant générée sur le becquet dans la position de repos par un courant d'air agissant à partir d'une vitesse de déplacement déterminée,
**caractérisé en ce que**
l'emplacement du becquet (6) sur l'arrière de véhicule (3), la forme du becquet (6) et l'emplacement de l'axe de rotation (16) sont choisis de sorte que le courant d'air qui agit sur la première arête de rupture (14) dépassant de la carrosserie (2) fait pivoter le becquet (6) autour de l'axe de rotation (16) de la position de repos (7) dans la position de fonctionnement (26) autour d'un angle (α), de sorte que dans la position de fonctionnement (26) intervient une deuxième arête de rupture (21) formée sur une partie avant (20) située sur une face inférieure (22) du becquet (6).

2. Véhicule automobile selon la revendication 1,
**caractérisé en ce que**
la carrosserie (2) présente sur l'arrière de véhicule (3) un évidement (5) dans lequel est logé au moins un becquet (6) pivotant autour de l'axe de rotation (16), et l'axe de rotation (16) est formé sur une partie arrière (11) du becquet (6).

3. Véhicule automobile selon la revendication 1 ou 2,
**caractérisé en ce que**
l'angle de pivotement α entre la position de repos (7) et la position de fonctionnement (26) est de l'ordre de α = 90° ± 45°.

4. Véhicule automobile selon l'une quelconque des revendications précédentes,
**caractérisé en ce que**
le becquet (6) est muni d'un dispositif de rappel qui ramène le becquet (6) automatiquement ou commandé individuellement de la position de fonctionnement (26) dans la position de repos (7).

5. Véhicule automobile selon l'une quelconque des revendications précédentes,
**caractérisé en ce qu'**
un espace creux (10) est formé sur une partie arrière (11) du becquet (6) dans lequel est disposé un composant de véhicule (12, 13).

6. Véhicule automobile selon la revendication 5,
**caractérisé en ce que**
le composant de véhicule (12) est un feu stop (13).
